# EUROPEAN PATENT APPLICATION

(11) **EP 2 209 233 A1**
(43) Date of publication of application: **21.07.2010**
(21) Application number: 09016127.4
(22) Date of filing: 30.12.2009
(51) Int. Cl.: H04B 10/207, H04J 3/16, H01S 3/11

(54) **Optical communications systems and optical line terminals**

(30) Priority: 15.01.2009 JP 2009006256
(71) Applicant: Hitachi CO., LTD., 6-6 Marunouchi 1-chome Chiyoda-ku Tokyo 100-8280 (JP)
(72) Inventor: Sagawa, Misuzu, Tokyo 100-8220 (JP); Sugawara, Toshiki, Tokyo 100-8220 (JP)
(74) Representative: Strehl Schübel-Hopf & Partner

(57) **Abstract**

In an optical communications system in which an OLT transceiver and a plurality of ONU transceivers are connected to each other via an optical fiber and a TDMA system in which a signal from each of the ONU transceivers is issued at a timing assigned by the OLT transceiver is used, each of the ONU transceivers includes a light source which has modulation function of a Fabry-Perot laser that oscillates multi-mode lights of different wavelengths, the OLT transceiver includes a single-longitudinal-mode light source which has modulation function of a DFB laser that oscillates a single-longitudinal-mode light, and the light source which has modulation function included in each of the ONU transceivers and the single-longitudinal-mode light source which has modulation function included in the OLT transceiver are optically connected to each other via an optical fiber.

## Description

### TECHNICAL FIELD OF THE INVENTION

The present invention relates to a bi-directed optical communications system including an optical line terminal (OLT) and a plurality of optical network units (ONUs), and in particular to a technique effectively applied to an optical communications system for use in a passive optical network (PON) using time division multiple access (TDMA) as signal multiplexing for constructing an optical access network, and an OLT and an ONU used therein.

### BACKGROUND OF THE INVENTION

According to studies by the present inventors, services on networks have been diversified, and the use of new services taking advantages of the networks has been expanding. A typical example thereof is a broadcasting-communications integrated service, that is, an integration of broadcasting, the Internet, and telephone (voice communication) services called a triple-play service. To achieve this triple-play service, construction of a fiber to the home (FTTH) system with PON has become a mainstream as an access network.

In the FTTH system with PON, a plurality of subscribers share an optical fiber from a subscriber accommodation station to an optical splitter and facilities in the station to share the cost, thereby reducing the initial cost and the management and maintenance cost. The FTTH system using the PON technique is a network of a shared media type mentioned above, and the band that a subscriber can use is roughly equal to a value obtained by dividing a maximum throughput of the system by the number of sharing subscribers. However, it is stochastically rare that all subscribers access at the same time. Therefore, in effect, with a statistical multiplexing effect, the subscribers can use a larger band. Such a wide band of the FTTH system with PON is important for achieving comfortable triple-play services.

Examples of the current system include G-PON systems in ITU-T (ITU-T G984.1, "Gigabit-capable Passive Optical Networks (G-PON): General Characteristics" (Non-Patent Document 1); ITU-T G984.2, "Gigabit-capable Passive Optical Networks (G-PON) : Physical Media Dependent (PMD) layer specification" (Non-Patent Document 2); and ITU-T G984.3, "Gigabit-capable Passive Optical Networks (G-PON): Transmission convergence layer specification" (Non-Patent Document 3)) and GE-PON systems in IEEE standards (IEEE 802.3ah "CSMA/CD Access Method and Physical Layer Specifications Amendment: Media Access Control Parameters, Physical Layers, and Management Parameters for Subscriber Access Networks" (Non-Patent Document 4)). For example, in a G-PON system, a station-side device (OLT) can accommodate 264 user-side devices (ONUs) at a maximum via a 2.4-Gbps high-speed optical line. Also, standardization has been proceeding for the introduction of a 10 GE-PON system as a next-generation FTTH system.

### SUMMARY OF THE INVENTION

Meanwhile, in the current system as described above, in order to fulfill the requirements from the upstream-signal wavelength band and transmission waveform quality in the PON, signals from an optical-communications subscribers' side have to be generated by using a distributed feedback semiconductor laser (distributed feedback laser diode (DFB laser)). On the other hand, since the DFB laser is expensive, a Fabry-Perot-type semiconductor laser (also abbreviated as Fabry-Perot laser) can be used in place of the DFB laser so as to achieve cost reduction. However, since the Fabry-Perot laser has a larger temperature dependency of an oscillation wavelength compared with the DFB laser and makes a multi-longitudinal-mode oscillation, it has a problem that signal degradation due to transmission is large.

Therefore, an object of the present invention is to provide an optical communications system using the PON technique excellent in transmission quality with a simple structure and at low cost, by using a Fabry-Perot laser which can solve the above-described problem and achieve the cost reduction.

The above and other objects and novel characteristics of the present invention will be apparent from the description of this specification and the accompanying drawings.

The typical ones of the inventions disclosed in this application will be briefly described as follows.

That is, according to the summary of a typical embodiment of the present invention, in an optical communications system where an OLT and a plurality of ONUs are connected via an optical fiber and a TDMA system in which a signal from the ONU is issued at a timing assigned by the OLT is used, each of the ONUs is provided with a Fabry-Perot laser that oscillates multi-mode lights having different wavelengths, the OLT is provided with a DFB laser that oscillates a single-longitudinal-mode light, and the Fabri-Perot laser in each of the ONUs and the DFB laser in the OLT are optically connected via an optical fiber.

The effects obtained by typical embodiments of the inventions disclosed in this application will be briefly described below.

That is, as an effect obtained by the typical embodiment of the present invention, transmission quality equivalent to that of the ONU having a DFB laser can be achieved by the ONU having a Fabry-Perot laser. As a result, an optical communications system using the PON technique excellent in transmission quality can be provided with a simple structure and at low cost.

### BRIEF DESCRIPTIONS OF THE DRAWINGS

FIG. 1 is a diagram showing an example of a structure of a PON system in an embodiment of an optical communications system according to the present invention;
FIG. 2A is a graph showing an example of a spectrum of a transmission optical signal from a light source which has modulation function in an ONU in the PON system in an embodiment of the optical communications system according to the present invention; and
FIG. 2B is a graph showing an example of a spectrum of a transmission optical signal from a light source which has modulation function in an ONU in the PON system in an embodiment of the optical communications system according to the present invention.

### DESCRIPTIONS OF THE PREFERRED EMBODIMENTS

Embodiments of the present invention will be described in detail below with reference to the drawings.

### [Structure of PON System]

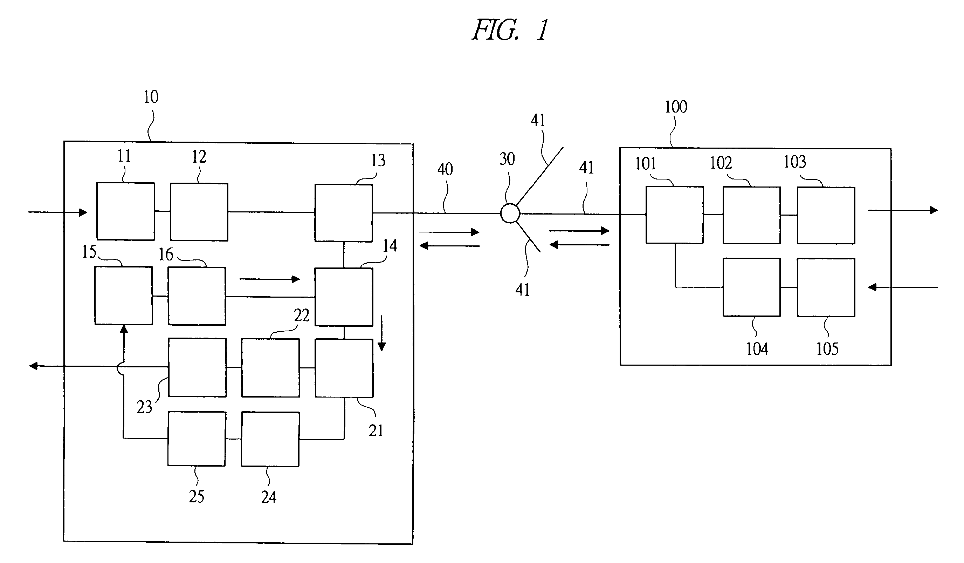

First, an example of a structure of a PON system in an embodiment of an optical communications system according to the present invention will be described with reference to FIG. 1. FIG. 1 shows an example of a structure of the PON system in the present embodiment.

The PON system in the present embodiment includes an OLT transceiver 10 on a station side and a plurality of ONU transceivers 100 on a user side (in FIG. 1, one ONU transceiver is representatively shown), and these transceivers are connected to each other via an OLT-side optical fiber 40 connected to the OLT-side transceiver 10, ONU-side optical fibers 41 respectively connected to the ONU transceivers 100, and an optical branching network unit 30 connecting the OLT-side optical fiber 40 and the ONU-side optical fibers 41.

This PON system is an optical communications system for use in a PON using a system in which a signal from the ONU transceiver 100 is issued at a timing assigned by the OLT transceiver 10, that is, using a TDMA system as a signal multiplexing technique.

### <Structure of OLT Transceiver>

The OLT transceiver 10 includes a transmission-side analog front end unit 11, a light source which has modulation function 12, a wavelength division multiplexing (WDM) unit (wavelength multiplexing/demultiplexing unit or multiplexer/demultiplexer) 13, a circulator 14, an analog front end unit 15 for single-longitudinal-mode light source, a single-longitudinal-mode light source which has modulation function 16, an optical-intensity branching unit 21, an optical receiver 22, a receiver-side analog front end unit 23, a received-signal spectrum and intensity monitor 24, and a monitor feedback unit 25. These components in the OLT transceiver 10 are connected as described below, and a main function of each of them is as described further below in the signal processing procedure.

In the OLT transceiver 10, the light source which has modulation function 12 is connected to the transmission-side analog front end unit 11, and the WDM unit 13 is connected to the light source which has modulation function 12. This WDM unit 13 is connected to the OLT-side optical fiber 40. On the other hand, the single-longitudinal-mode light source which has modulation function 16 is connected to the analog front end unit 15 for the single-longitudinal-mode light source, the circulator 14 is connected to the single-longitudinal-mode light source which has modulation function 16, and the circulator 14 is connected to the WDM unit 13.

Also, in the OLT transceiver 10, the optical-intensity branching unit 21 is connected to the circulator 14, the optical receiver 22 is connected to this optical-intensity branching unit 21, and the receiver-side analog front end unit 23 is connected to this optical receiver 22. On the other hand, the received-signal spectrum and intensity monitor 24 is connected to the optical-intensity branching unit 21, the monitor feedback unit 25 is connected to this received-signal spectrum and intensity monitor 24, and this monitor feedback unit 25 is connected to the analog front end unit 15 for the single-longitudinal-mode light source.

### <Structure of ONU Transceiver>

The ONU transceiver 100 includes a WDM unit 101, an optical receiver 102, a receiver-side analog front end unit 103, a light source which has modulation function 104, and a transmission-side analog front end unit 105. These components in the ONU transceiver 100 are connected as described below, and a main function of each of them is as described further below in the signal processing procedure.

In the ONU transceiver 100, the optical receiver 102 is connected to the WDM unit 101 to which the ONU-side optical fiber 41 is connected, and the receiver-side analog front end unit 103 is connected to this optical receiver 102.

Also, in the ONU transceiver 100, the light source which has modulation function 104 is connected to the transmission-side analog front end unit 105, and this light source which has modulation function 104 is connected to the WDM unit 101.

### <Features of Structure of PON System>

In the above-described structure of the PON system, in particular, a Fabry-Perot laser that oscillates multi-mode lights having different wavelengths is used for the light source which has modulation function 104 in the ONU transceiver 100. Also, a DFB laser that oscillates a single-longitudinal-mode light is used for the single-longitudinal-mode light source which has modulation function 16 in the OLT transceiver 10. Furthermore, the reception-signal spectrum and intensity monitor 24 has a function as a mechanism that monitors the intensity and spectrum of a signal from the ONU transceiver 100, and the monitor feedback unit 25 has a function as a mechanism that modulates the intensity of output light from the single-longitudinal-mode light source which has modulation function 16 in accordance with the intensity and spectrum of the monitored signal.

### [Signal Processing Procedure of PON System]

Next, the procedure of processing a signal in the PON system in the present embodiment will be described along the flow of the signal with reference to FIG. 1.

### <Downstream signal from OLT to ONU>

First, an optical signal from the OLT to the ONU (downstream signal) will be described. The signal is amplified by the transmission-side analog front end unit 11 of the OLT transceiver 10 so as to obtain a sufficient driving power for the modulation in the light source which has modulation function 12. The amplified signal is modulated by the light source which has modulation function 12 and is then outputted as signal light. When a bit rate is up to about 2.5 Gbps, the light source which has modulation function 12 can achieve the modulation by the direct modulation of the laser. Also, in G-PON and GE-PON, a wavelength of a 1490 nm band is used for the modulated signal light. Here, when the bit rate becomes approximately 10 Gbps, due to an influence of the above-described chromatic dispersion, the light source which has modulation function 12 can be achieved by combining or integrating laser and an external EA modulator. Also, for the modulated signal light for use in 10 Gbps PON, a wavelength of a 1570 nm band (L-band) or longer is used. When the signal light is high output, the light source which has modulation function 12 may be provided with an optical amplifier.

On the other hand, a signal for controlling the spectrum of an optical signal from the ONU to the OLT is also transmitted as an optical signal from the OLT to the ONU. The signal amplified by the analog front end unit 15 for the single-longitudinal-mode light source so as to obtain a sufficient driving power is outputted from the single-longitudinal-mode light source which has modulation function 16 as an optical signal. The wavelength of the single-longitudinal-mode light source which has modulation function 16 is defined by the optical signal from the ONU to the OLT, and a 1310 nm band is used in G-PON and GE-PON and a 1270 nm band is used in 10 Gbps PON. The optical signal generated by the single-longitudinal-mode light source which has modulation function 16 is multiplexed by the light source which has modulation function 12 and the WDM unit 13 via the circulator 14, and is then transmitted to the OLT-side optical fiber 40.

This optical signal transmitted to the OLT-side optical fiber 40 is inputted through the OLT-side optical fiber 40, the optical branch network unit 30, and the ONU-side optical fiber 41 to the ONU transceiver 100. In the ONU transceiver 100, the WDM unit 101 demultiplexes the wavelength components of, for example, a 1490 nm band or 1570 nm band issued from the light source which has modulation function 12, and then inputs this obtained signal light to the optical receiver 102. As the optical receiver 102, for example, a photodiode can be used. In more detail, for example, a PIN-type photodiode (PD) using a PIN-junction semiconductor, or when sensitivity is required, an avalanche photodiode (APD) can be used. A minute change in current outputted from the optical receiver 102 of a photodiode is transformed and amplified by the reception-side analog front end unit 103 to a change in voltage and then outputted. On the other hand, the light emitted from the single-longitudinal-mode light source which has modulation function 16 is inputted by the WDM unit 101 to the light source which has modulation function 104 and optically coupled.

### <Upstream Signal from ONU to OLT>

Next, an optical signal from the ONU to the OLT (upstream signal) will be described. A PON-frame processed signal is inputted to the ONU transceiver 100. The electric signal is amplified by the transmission-side analog front end unit 105 so as to obtain a sufficient driving power for the modulation in the light source which has modulation function 104. This amplified signal is modulated by the light source which has modulation function 104 and is then outputted as a signal light. Since the light source which has modulation function 104 is a Fabri-Perot laser, it operates multi-longitudinal mode oscillation in a free running state. However, in this structure, because of the coupling with the light emitted from the single-longitudinal-mode light source which has modulation function 16 described above, the wavelength of the signal light emitted from the light source which has modulation function 104 is mode-locked to be fixed to the wavelength of the single-longitudinal-mode light source which has modulation function 16. This signal light passes through the WDM unit 101 and then is transmitted to the ONU-side optical fiber 41.

The optical signal transmitted to the ONU-side optical fiber 41 is inputted through the optical branch network unit 30 and the OLT-side optical fiber 40 to the OLT transceiver 10. Then, in the OLT transceiver 10, after passing through the WDM unit 13, an upstream optical signal is demultiplexed by the circulator 14, and the optical signal is inputted to the optical receiver 22 through the optical-intensity branching unit 21. As the optical receiver 22, for example, a photodiode can be used. In more detail, for example, a PIN-type PD using a PIN-junction semiconductor, or when sensitivity is required, an APD or the like can be used. A minute change in current outputted from the optical receiver 22 of a photodiode is transformed and amplified by the reception-side analog front end unit 23 to a change in voltage and then outputted.

On the other hand, a part of light branched by the optical-intensity branching unit 21 is inputted to the reception-signal spectrum and intensity monitor 24, and the spectrum and intensity of the upstream signal are monitored. The monitored optical signal is outputted as an electric signal to be inputted to the monitor feedback unit 25. The monitor feedback unit 25 detects, from the spectrum and the signal intensity, a mode-lock state of the light source which has modulation function 104 by the single-longitudinal-mode light source which has modulation function 16, and then feeds back to an output intensity of the single-longitudinal-mode light source which has modulation function 16 so that the upstream signal from each ONU becomes a stable single-longitudinal-mode signal. In this manner, the intensity of the single-longitudinal-mode light source which has modulation function 16 is modulated in accordance with the timing assigned to each ONU.

### [Spectrum of Transmission Optical Signal from ONU]

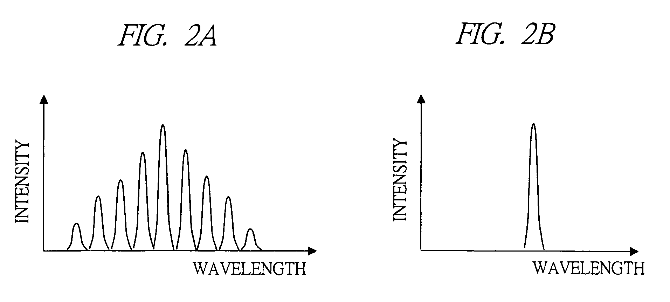

Next, an example of a spectrum of the transmission optical signal from the ONU will be described with reference to FIGs. 2A and 2B. FIGs. 2A and 2B show an example of a spectrum of the transmission optical signal from the light source which has modulation function 104 in the ONU (where the horizontal axis represents wavelength and the vertical axis represents intensity).

In a free running state, the spectrum of the light from the light source which has modulation function 104 is of a multi-longitudinal mode typical to a Fabry-Perot laser as shown in FIG. 2A. Therefore, even in a 1300 nm band where dispersion of a single mode fiber is small, signal light propagating through a single-mode fiber is affected by dispersion, and therefore, the waveform thereof degrades.

However, the light from the light source which has modulation function 104 in a mode-locked state by the single-longitudinal-mode light source which has modulation function 16 has a spectrum of a single longitudinal mode as shown in FIG. 2B. As described above, since a signal has the spectrum in a single longitudinal mode in the mode-locked state, the waveform degradation due to the influence of dispersion by the propagation in a single-mode fiber is small compared with a signal having a spectrum in a multi-longitudinal mode.

### [Effect of the Present Embodiment]

As described above, since the PON system of the present embodiment has the structure in which the single-longitudinal-mode light source which has modulation function 16 having a DFB laser in the OLT transceiver 10 and the light source which has modulation function 104 having a Fabri-Perot laser in the ONU transceiver 100 are optically connected, the wavelength degradation can be reduced in a mode-locked state, so that excellent transmission quality can be achieved. More specifically, the transmission quality equivalent to that of the ONU transceiver having a DFB laser can be achieved by the ONU transceiver 100 having a Fabry-Perot laser. As a result, a PON system excellent in transmission quality can be accomplished at low cost.

In the foregoing, the invention made by the inventors of the present invention has been concretely described based on the embodiments. However, it is needless to say that the present invention is not limited to the foregoing embodiments and various modifications and alterations can be made within the scope of the present invention.

For instance, the wavelength bands described in the embodiment above are merely by way of example. In the present invention, an appropriate wavelength band can be adopted in accordance with the adopted device. Also, the present invention can be applied to various optical communications systems other than the PON.

The present invention relates to a bi-directed optical communications system including an OLT and a plurality of ONUs, and is suitable, in particular, to a PON system using a TDMA system as signal multiplexing for constructing an optical access network. Furthermore, the present invention can also be used for various optical communications systems other than the PON.

## Claims

1. An optical communications system including an optical line terminal and a plurality of optical network units, the optical line terminal and the plurality of optical network units being connected via an optical fiber, the optical communications system using a time division multiple access in which a signal from each of the optical network units is issued at a timing assigned by the optical line terminal, wherein
each of the optical network units includes a first laser that oscillates multi-mode lights having different wavelengths,
the optical line terminal has a second laser that oscillates a single-longitudinal-mode light, and
the first laser included in each of the optical network units and the second laser included in the optical line terminal are optically connected via the optical fiber.

2. The optical communications system according to claim 1, wherein
the optical line terminal further includes a monitoring mechanism that monitors an intensity of a signal from any of the optical network units.

3. The optical communications system according to claim 2, wherein
the optical line terminal further includes a mechanism that modulates an intensity of an output light from the second laser in accordance with the intensity of the signal monitored by the monitoring mechanism.

4. The optical communications system according to claim 1, wherein
the optical line terminal further includes a monitoring mechanism that monitors a spectrum of a signal from any of the optical network units.

5. The optical communications system according to claim 4, wherein
the optical line terminal further includes a mechanism that modulates an intensity of an output light from the second laser in accordance with the spectrum of the signal monitored by the monitoring mechanism.

6. The optical communications system according to claim 1, wherein
the second laser is a distributed feedback semiconductor laser.

7. The optical communications system according to claim 1, wherein
in a state where the first laser and the second laser are optically connected to each other, a wavelength of a signal issued from the first laser is coupled to a signal issued from the second laser to be mode-locked and fixed to a wavelength of the second laser.

8. An optical line terminal connected to a plurality of optical network units via an optical fiber, wherein
a time division multiple access in which a signal from each of the optical network units is issued at a timing assigned by the optical line terminal is used,
a second laser that oscillates a single-longitudinal-mode light, and
a first laser which is included in the optical network unit and oscillates multi-mode lights having different wavelengths and the second laser are optically connected via the optical fiber.

9. The optical line terminal according to claim 8, further comprising:
a monitoring mechanism that monitors an intensity or spectrum of the signal from any of the optical network units; and
a mechanism that modulates an intensity of an output light of the second laser in accordance with the intensity or spectrum of the signal monitored by the monitoring mechanism.

10. The optical line terminal according to claim 8, wherein
in a state where the first laser and the second laser are optically connected to each other, a wavelength of a signal issued from the first laser is coupled to a signal issued from the second laser to be mode-locked and fixed to a wavelength of the second laser.
